# FASCICULE DE BREVET EUROPEEN

(11) **EP 1 806 080 B1**
(45) Date de publication et mention de la délivrance du brevet: **07.01.2015**
(21) Numéro de dépôt: 06356152.6
(22) Date de dépôt: 22.12.2006
(51) Int. Cl.: A47J 43/07, A47J 43/044

(54) **Accessoire de préparation culinaire à outil rotatif prévu pour être utilisé avec un boîtier moteur rapporté**
Zubehörteil für die Zubereitung von Speisen mit einem sich drehenden Instrument, das zur Verwendung mit einem Aufsteck-Motorgehäuse vorgesehen ist
Cooking preparation accessory with a rotating tool intended to be used with a related motorised assembly

(30) Priorité: 10.01.2006 FR 0600186
(43) Date de publication de la demande: 11.07.2007
(73) Titulaire: SEB S.A., 69130 Ecully (FR)
(72) Inventeur: Lecerf, Joël, 50190 Periers (FR)
(74) Mandataire: Kiehl, Hubert

(56) Documents cités:
- EP-A1- 1 483 997
- US-A- 4 738 858
- US-A- 5 156 084

## Description

La présente invention se rapporte au domaine technique général des appareils électroménagers de préparation culinaire. La présente invention concerne plus particulièrement les accessoires de préparation culinaire, comportant un outil rotatif agencé dans un récipient de travail, prévu pour être utilisé avec un boîtier moteur rapporté. La présente invention concerne également les appareils électroménagers de préparation culinaire comportant un accessoire du type précité.

Il est connu, de la demande de brevet EP 529 287, un accessoire de préparation culinaire comportant un récipient de travail fermé par un couvercle supportant un arbre d'entraînement destiné à s'accoupler d'une part avec l'entraîneur d'un boîtier moteur et d'autre part avec un outil rotatif pour le traitement des aliments. Dans ce document, l'arbre d'entraînement est monté dans un palier de sorte qu'il ne dispose d'aucune liberté radiale pour rattraper un éventuel écart de positionnement axial avec l'outil rotatif porté par le fond du récipient. Il en résulte une difficulté à engager le couvercle sur le récipient et un fonctionnement sous contrainte du palier qui génère du bruit et de l'échauffement. De plus, le palier présente l'inconvénient d'être très difficile à nettoyer, des aliments pouvant parvenir à s'insérer au travers de ce dernier.

Il est connu, de la demande de brevet EP 856 273, de remédier à ce problème de nettoyage en proposant un accessoire de préparation culinaire dans lequel l'arbre d'entraînement traverse le couvercle via une ouverture présentant un diamètre beaucoup plus important que le diamètre de l'arbre d'entraînement de sorte qu'il résulte un espace permettant l'évacuation des aliments lorsque l'on nettoie le couvercle hors de la fente.

Une telle solution présente cependant l'inconvénient de laisser un grand espace entre l'arbre d'entraînement et l'ouverture du couvercle pour permettre l'évacuation des morceaux d'aliments de sorte que l'arbre d'entraînement dispose d'une très grande liberté de mouvement et est peu guidé axialement lorsque le couvercle est soulevé du récipient, ce qui complique l'opération d'engagement de l'extrémité inférieure de l'arbre d'entraînement avec l'extrémité supérieure de l'outil lors de la mise en place du couvercle sur le récipient. De plus, la présence d'un espace important entre l'arbre d'entraînement et le couvercle présente l'inconvénient de permettre une remontée des aliments par cet espace lors de l'opération de hachage ou mixage des aliments ou bien encore lors de la manipulation du récipient.

L'invention qui suit vise à pallier ces inconvénients en proposant un accessoire de préparation culinaire comportant un récipient de travail fermé par un couvercle supportant un arbre d'entraînement destiné à s'accoupler d'une part avec un boîtier moteur et d'autre part avec un outil rotatif, dans lequel l'arbre d'entraînement est relié au couvercle par une liaison assurant une stabilisation de l'arbre sur le couvercle lorsque ce dernier est désengagé du récipient, tout en autorisant un déplacement radial de l'arbre d'entraînement sur le couvercle lorsque ce dernier est mis en place sur le récipient et dans lequel la liaison ne permet pas la remontée des aliments.

Le but de l'invention est atteint par un accessoire de préparation culinaire prévu pour être utilisé avec un boîtier moteur, l'accessoire comportant un récipient de travail fermé par un couvercle, le couvercle supportant un arbre d'entraînement destiné à s'accoupler d'une part avec le boîtier moteur et d'autre part avec un outil rotatif disposé dans le récipient de travail, l'arbre d'entraînement traversant le couvercle via une ouverture, le diamètre de l'ouverture étant supérieur au diamètre de l'arbre d'entraînement de sorte qu'il résulte un espace permettant un débattement radial de l'arbre d'entraînement au travers de l'ouverture, caractérisé en ce que ledit espace est fermé par un joint d'étanchéité.

Une telle caractéristique présente l'avantage de laisser une liberté de mouvement à l'arbre permettant de rattraper un défaut de coaxialité tout en empêchant la remontée des aliments.

Selon une autre caractéristique de l'invention, l'arbre d'entraînement est maintenu sensiblement dans la direction axiale du couvercle par le joint d'étanchéité lorsque le couvercle est soulevé du récipient.

Une telle caractéristique présente l'avantage de faciliter l'engagement correct de l'entraîneur sur l'outil rotatif lors de la mise en place du couvercle sur le récipient.

Selon une autre caractéristique de l'invention, le joint d'étanchéité est en matériau élastomère.

Selon une autre caractéristique de l'invention, le joint d'étanchéité est porté par le couvercle.

Selon une autre caractéristique de l'invention, le joint d'étanchéité est un joint souple à lèvre.

Selon encore une autre caractéristique de l'invention, le joint d'étanchéité présente une forme sensiblement tronconique, ce dernier comportant une extrémité divergente présentant une collerette qui est fixée au couvercle par une bague de maintien et une extrémité convergente venant au contact de l'arbre d'entraînement.

Selon encore une autre caractéristique de l'invention, le couvercle comporte une zone munie d'orifices de soupoudrage des aliments.

L'invention concerne également un appareil électroménager comportant un boîtier moteur et un accessoire de préparation culinaire, l'accessoire de préparation culinaire comportant un récipient de travail fermé par un couvercle supportant un arbre d'entraînement destiné d'une part à s'accoupler avec le boîtier moteur et d'autre part à s'accoupler avec un outil rotatif disposé dans le récipient de travail, caractérisé en ce que l'accessoire de préparation culinaire est tel que précédemment décrit.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective éclatée d'un accessoire de préparation culinaire selon un mode particulier de réalisation de l'invention ;
- la figure 2 est une autre vue en perspective éclatée de l'accessoire de préparation culinaire de la figure 1 ;
- la figure 3 est une vue en coupe longitudinale éclatée de l'accessoire de préparation culinaire des figures 1 et 2 ;
- la figure 4 est une vue en coupe longitudinale de l'accessoire culinaire des figures 1 et 2 lorsque tous les éléments sont assemblés les uns aux autres.

Seuls les éléments nécessaires à la compréhension de l'invention ont été représentés. Pour faciliter la lecture des dessins les mêmes éléments portent les mêmes références d'une figure à l'autre.

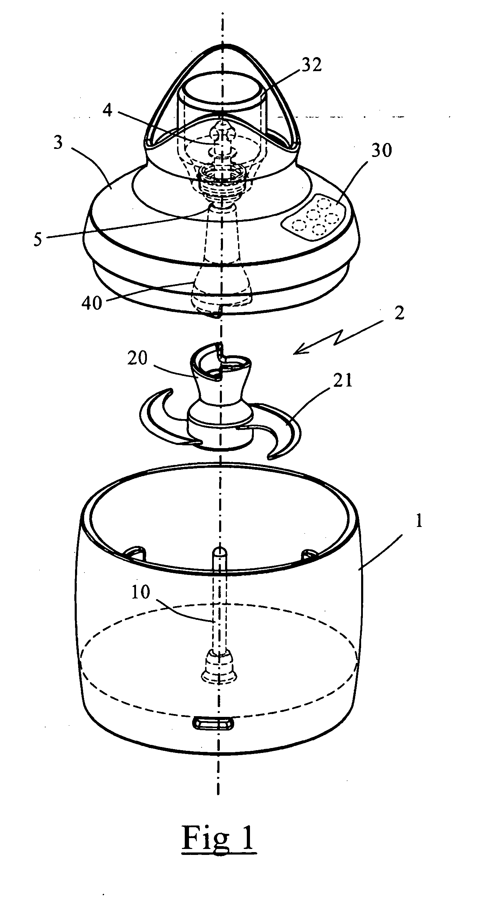

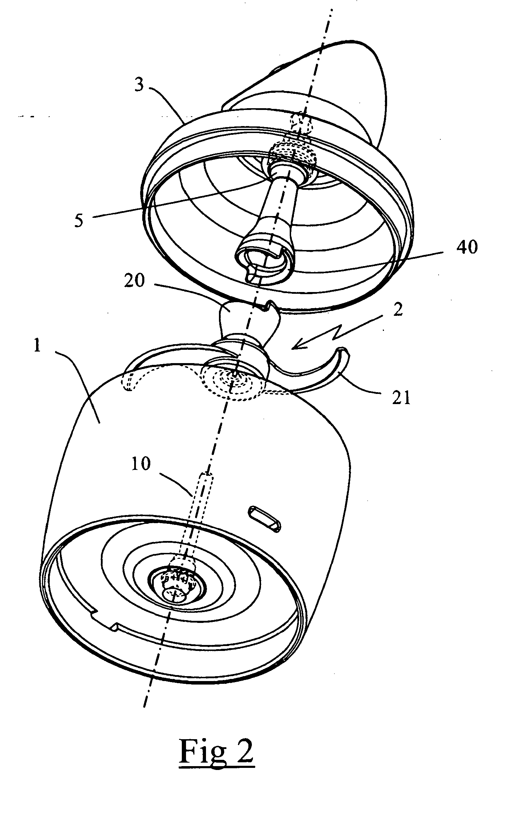

Les figures 1 et 2 représentent un accessoire mini-hachoir destiné à être accouplé avec un boîtier moteur de pied mixeur, non représenté sur les figures. Un tel boîtier moteur de pied mixeur est par exemple décrit dans la demande de brevet FR-A1-2 871 356 déposée par la demanderesse.

Conformément à ces figures, cet accessoire mini-hachoir comporte un récipient de travail 1 au fond duquel s'étend verticalement un axe de guidage 10 central sur lequel un outil de travail 2 est monté en rotation. L'outil de travail 2 comporte un moyeu 20 supportant des couteaux 21 et présente un alésage central 22 dans lequel s'insère l'axe de guidage 10.

Le récipient 1 est fermé par un couvercle 3 qui supporte en son centre un arbre d'entraînement 4, représenté en pointillé sur la figure 1, dont l'extrémité supérieure est susceptible d'être entraînée en rotation par le boîtier moteur et dont l'extrémité inférieure comporte un entraîneur 40 venant coopérer avec l'extrémité supérieure du moyeu 20 de l'outil rotatif pour entraîner ce dernier en rotation. De manière avantageuse, le couvercle 3 présente une zone 30 munie d'orifices de soupoudrage, représentés en pointillé sur la figure 1, fermée par un volet.

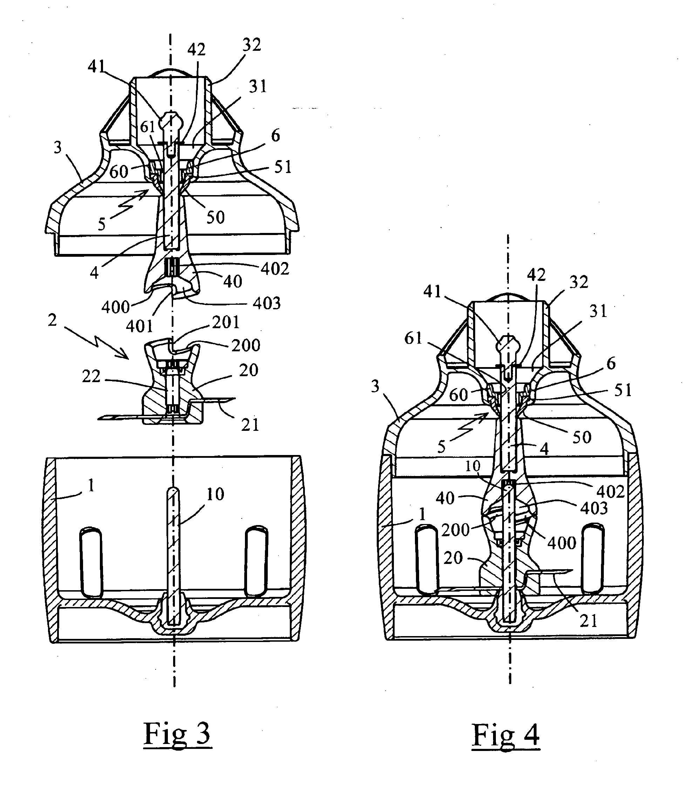

Conformément aux figures 3 et 4, l'arbre d'entraînement 4 traverse le couvercle 3 via une ouverture disposée au fond d'une cavité centrale 31 sensiblement conique disposée dans le prolongement d'un manchon 32 de plus grand diamètre adapté pour se connecter au boîtier moteur, l'extrémité supérieure de l'arbre d'entraînement 4 débouchant dans ledit manchon 32 et présentant deux oreilles 41 prévues pour s'engager dans un entraîneur du boîtier moteur.

Plus particulièrement selon l'invention, l'ouverture par laquelle l'arbre d'entraînement 4 traverse le couvercle 3 reçoit un joint d'étanchéité 5 comportant avantageusement une lèvre souple 50 sensiblement conique dont l'extrémité convergente vient au contact de l'arbre d'entraînement 4 et l'extrémité divergente est munie d'une collerette radiale 51 qui vient en appui contre les bords de l'ouverture. Ce joint d'étanchéité 5 est avantageusement réalisé en matériau élastomère et est immobilisé par une bague de maintien 6 qui vient s'encliqueter dans la cavité centrale 31, la bague 6 présentant un bossage périphérique 60 s'engageant dans une rainure de la cavité centrale 31.

La bague de maintien 6 comporte une ouverture 61 pour le passage de l'arbre d'entraînement 4 présentant un diamètre supérieur au diamètre extérieur de l'arbre d'entraînement 4 de sorte que ce dernier peut se déplacer radialement et s'aligner automatiquement avec l'axe de guidage 10 lorsque le couvercle 3 est mis en place sur le récipient 1. De préférence, le diamètre de l'ouverture 61 est tel que le débattement radial de l'arbre d'entraînement 4 est supérieur à 1 mm. Un tel déplacement radial de l'arbre d'entraînement 4 permet de corriger un défaut de coaxialité entre l'arbre d'entraînement 4 et l'axe de guidage 10, généré notamment par les dispersions de fabrication, et s'accompagne d'une légère déformation de la lèvre 50 du joint d'étanchéité 5, sans toutefois nuire à l'étanchéité.

L'arbre d'entraînement 4 est avantageusement constitué par deux parties assemblées l'une sur l'autre, l'arbre comportant une rondelle 42 à la jonction des deux partie empêchant le retrait de l'axe au travers de l'orifice 61 de la bague de maintien 6.

De manière préférentielle, l'entraîneur 40 comporte une partie supérieure fuselée, enveloppant l'arbre d'entraînement 4, dont l'extrémité supérieure parvient en bordure du joint d'étanchéité 5 lorsque le couvercle 3 est fermé.

L'entraîneur 40 présente une partie inférieure évasée creuse venant coopérer avec la partie supérieure du moyeu 20 de l'outil de travail pour entraîner ce dernier en rotation lorsque le couvercle 3 est fermé sur le récipient.

A cet effet, la partie évasée de l'entraîneur 40 présente un bord 400 dont la forme échancrée coopère avec le bord supérieur 200 de forme complémentaire porté par l'extrémité supérieure évasée du moyeu 20.

De manière préférentielle, la forme échancrée du bord 400 de l'entraîneur 40 est adaptée pour transmettre uniquement un couple moteur à l'outil rotatif 2 sans maintenir radialement l'entraîneur 40 par rapport au moyeu 20 de l'outil 2.

A titre d'exemple, les formes des bords 200,400 du moyeu de l'outil rotatif et de l'entraîneur venant en vis-à-vis présentent deux marches 201, 401 disposées symétriquement l'une par rapport à l'autre, ces marches 201, 401 comportant un bord latéral s'étendant sensiblement axialement et un bord supérieur s'étendant hélicoïdalement pour rejoindre la base du bord latéral de l'autre marche.

Comme on peut mieux le voir sur la figure 4, le guidage radial de l'entraîneur 40 par rapport au moyeu 20 de l'outil rotatif est assuré par l'extrémité de l'axe de guidage 10 porté par le récipient 1. A cet effet, l'axe de guidage 10 traverse l'alésage 22 de l'outil de travail 2, lorsque ce dernier est mis en place dans le récipient 1, et vient s'engager sur quelques millimètres dans un orifice 402 disposé au centre d'une cavité convergente 403 définie par la partie creuse de l'entraîneur 40.

L'engagement de l'entraîneur 40 sur l'extrémité de l'axe de guidage 10 lors de la fermeture du récipient 1 au moyen du couvercle 3 est ainsi facilité par la présence, à l'extrémité évasée de l'entraîneur 40, de la cavité 403 convergeant vers l'orifice 402 et par le fait que l'arbre d'entraînement 4 est maintenu sensiblement dans la direction axiale du couvercle 3 par le joint d'étanchéité 5.

De telles formes conjuguées de l'entraîneur 40 et du moyeu 20 de l'outil présentent l'avantage d'assurer une grande sécurité d'utilisation de l'accessoire en empêchant un engagement stable de l'outil rotatif sur l'entraîneur si l'utilisateur essaye de positionner l'outil rotatif 2 sur l'entraîneur sans utiliser le récipient 1, mais en tenant le couvercle 3 tête en bas accouplé au boîtier moteur. En effet, si l'utilisateur effectue une telle opération en posant l'outil rotatif 2 en équilibre sur l'entraîneur 40, le moindre couple résistant appliqué sur les couteaux 21 engendrera un effort radial qui désengagera l'outil rotatif 2 de l'entraîneur 40. Les risques de coupure profonde pour l'utilisateur par la mise en marche du boîtier moteur en l'absence de récipient sont donc considérablement réduits.

L'accessoire de préparation ainsi réalisé présente l'avantage de posséder un couvercle qui peut être facilement positionné sur le récipient grâce à la présence du joint d'étanchéité qui autorise un déplacement radial de l'arbre d'entraînement, ce qui permet de rattraper un défaut de coaxialité entre l'arbre et l'axe de guidage de l'outil, le joint assurant simultanément un prépositionnement axial de l'arbre d'entraînement de sorte que son engagement sur l'axe de guidage est facilité. Enfin, la présence du joint d'étanchéité permet d'éviter la remontée des aliments au travers de l'orifice lors de l'opération de hachage des aliments ou lors du soupoudrage par les orifices qui peuvent être prévus à cet effet sur le couvercle.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, le joint pourra être supporté par l'arbre d'entraînement et posséder une lèvre venant au contact du couvercle.

## Revendications

1. Accessoire de préparation culinaire prévu pour être utilisé avec un boîtier moteur rapporté, ledit accessoire comportant un récipient de travail (1) fermé par un couvercle (3), ledit couvercle (3) supportant un arbre d'entraînement (4) destiné à s'accoupler d'une part avec ledit boîtier moteur rapporté et d'autre part avec un outil rotatif (2) monté en rotation sur un axe de guidage (10) disposé au fond du récipient de travail (1), ledit arbre d'entraînement (4) traversant le couvercle (3) via une ouverture (61), le diamètre de l'ouverture (61) étant supérieur au diamètre de l'arbre d'entraînement (4) de sorte qu'il résulte un espace permettant un débattement radial de l'arbre d'entraînement (4) au travers de l'ouverture (61), **caractérisé en ce que** ledit espace est fermé par un joint d'étanchéité (5).

2. Accessoire de préparation culinaire selon la revendication 1, **caractérisé en ce que** ledit arbre d'entraînement (4) est maintenu sensiblement dans la direction axiale du couvercle (3) par ledit joint d'étanchéité (5) lorsque le couvercle (3) est soulevé du récipient (1).

3. Accessoire de préparation culinaire selon l'une quelconque des revendications 1 à 2, **caractérisé en ce que** ledit joint d'étanchéité (5) est en matériau élastomère.

4. Accessoire de préparation culinaire selon l'une quelconque des revendications 1 à 3, **caractérisé en ce que** ledit joint d'étanchéité (5) est porté par le couvercle (3).

5. Accessoire de préparation culinaire selon l'une quelconque des revendications 1 à 4, **caractérisé en ce que** ledit joint d'étanchéité (5) est un joint à lèvre (50).

6. Accessoire de préparation culinaire selon la revendication 5, **caractérisé en ce que** le joint d'étanchéité (5) présente une forme sensiblement tronconique, ledit joint comportant une extrémité divergente présentant une collerette (51) qui est fixée au couvercle (3) par une bague de maintien (6) et une extrémité convergente venant au contact de l'arbre d'entraînement (4).

7. Accessoire de préparation culinaire selon l'une quelconque des revendications 1 à 6, **caractérisé en ce que** le couvercle (3) comporte une zone (30) munie d'orifices de soupoudrage des aliments.

8. Appareil électroménager de préparation culinaire comprenant un boîtier moteur et un accessoire de préparation culinaire, ledit accessoire de préparation culinaire comportant un récipient de travail (1) fermé par un couvercle (3) supportant un arbre d'entraînement (4) destiné d'une part à s'accoupler avec le boîtier moteur et d'autre part à s'accoupler avec un outil rotatif (2) disposé dans le récipient de travail (1), **caractérisé en ce que** ledit accessoire de préparation culinaire est conforme à l'une des revendications 1 à 7.

## Patentansprüche

1. Zubehörteil zur Zubereitung von Speisen, das zur Verwendung mit einem aufgesetzten Motorgehäuse vorgesehen ist, wobei das Zubehörteil einen Arbeitsbehälter (1) umfasst, der mit einem Deckel (3) verschlossen wird, wobei der Deckel (3) eine Antriebswelle (4) trägt, die dazu bestimmt ist, einerseits an das aufgesetzte Motorgehäuse und andererseits an ein Drehwerkzeug (2) anzukoppeln, das drehbar an einer Führungsachse (10) gelagert ist, die am Boden des Arbeitsbehälters (1) angeordnet ist, wobei die Antriebswelle (4) über eine Öffnung (61) durch den Deckel (3) hindurchgeführt wird, wobei der Durchmesser der Öffnung (61) größer ist als der Durchmesser der Antriebswelle (4), und zwar so, dass sich daraus ein Raum ergibt, der einen radialen Spielraum der Antriebswelle (4) über die Öffnung (61) hinweg ermöglicht, **dadurch gekennzeichnet, dass** dieser Raum durch einen Dichtungsring (5) geschlossen ist.

2. Zubehörteil zur Zubereitung von Speisen nach Anspruch 1, **dadurch gekennzeichnet, dass** die Antriebswelle (4) durch den Dichtungsring (5) deutlich an der Achse des Deckels (3) ausgerichtet gehalten wird, wenn der Deckel (3) vom Behälter (1) abgenommen wird.

3. Zubehörteil zur Zubereitung von Speisen nach einem der Ansprüche 1 bis 2, **dadurch gekennzeichnet, dass** der Dichtungsring (5) aus Elastomermaterial besteht.

4. Zubehörteil zur Zubereitung von Speisen nach einem der Ansprüche 1 bis 3, **dadurch gekennzeichnet, dass** der Dichtungsring (5) vom Deckel (3) gehalten wird.

5. Zubehörteil zur Zubereitung von Speisen nach einem der Ansprüche 1 bis 4, **dadurch gekennzeichnet, dass** der Dichtungsring (5) eine Lippendichtung (50) ist.

6. Zubehörteil zur Zubereitung von Speisen nach Anspruch 5, **dadurch gekennzeichnet, dass** der Dichtungsring (5) eine deutlich kegelstumpfartige Form aufweist, wobei die Dichtung einen ausladenden Rand umfasst, der einen Kragen (51) aufweist, der durch einen Haltering (6) am Deckel (3) befestigt ist, und einen zusammenlaufenden Rand, der mit der Antriebswelle (4) in Berührung kommt.

7. Zubehörteil zur Zubereitung von Speisen nach einem der Ansprüche 1 bis 6, **dadurch gekennzeichnet, dass** der Deckel (3) einen Bereich (30) umfasst, der mit Löchern zum Bestreuen von Speisen versehen ist.

8. Elektrohaushaltsgerät zur Zubereitung von Speisen mit einem Motorgehäuse und einem Zubehörteil zur Zubereitung von Speisen, wobei das Zubehörteil zur Zubereitung von Speisen einen Arbeitsbehälter (1) umfasst, der durch einen Deckel (3) verschlossen wird, der eine Antriebswelle (4) trägt, die dazu bestimmt ist, einerseits an das aufgesetzte Motorgehäuse und andererseits an ein Drehwerkzeug (2) anzukoppeln, das im Arbeitsbehälter (1) gelagert ist, **dadurch gekennzeichnet, dass** das Zubehörteil zur Zubereitung von Speisen einem der Ansprüche 1 bis 7 entspricht.

## Claims

1. Food preparation accessory intended for use with an attached motor housing, said accessory comprising a working receptacle (1) closed by a lid (3), said lid (3) supporting a drive shaft (4) designed to couple firstly with said attached motor housing and secondly with a rotary tool (2) rotatably mounted on a guide shaft (10) arranged at the bottom of the working receptacle (1), said drive shaft (4) passing through the lid (3) via an opening (61), the diameter of the opening (61) being greater than the diameter of the drive shaft (4) so that there is a radial clearance space around the drive shaft (4) through the opening (61), **characterised in that** said space is closed by a seal (5).

2. Food preparation accessory according to claim 1, **characterised in that** said drive shaft (4) is held substantially in the axial direction of the lid (3) by said seal (5) when the lid (3) is lifted off the receptacle (1).

3. Food preparation accessory according to claim 1 or 2, **characterised in that** said seal (5) is made from elastomer material.

4. Food preparation accessory according to any of claims 1 to 3, **characterised in that** said seal (5) is carried by the lid (3).

5. Food preparation accessory according to any of claims 1 to 4, **characterised in that** said seal (5) is a lip seal (50).

6. Food preparation accessory according to claim 5, **characterised in that** the seal (5) has a substantially frustoconical shape, said seal comprising a diverging end having a collar (51) which is attached to the lid (3) by a fastening ring (6) and a converging end coming into contact with the drive shaft (4).

7. Food preparation accessory according to any of claims 1 to 6, **characterised in that** the lid (3) comprises an area (30) equipped with food sprinkling holes.

8. Food preparation household electrical appliance comprising a motor housing and a food preparation accessory, said food preparation accessory comprising a working receptacle (1) closed by a lid (3) supporting a drive shaft (4) designed to couple firstly with the motor housing and secondly with a rotary tool (2) arranged in the working receptacle (1), **characterised in that** said food preparation accessory complies with one of claims 1 to 7.
